# FASCICULE DE BREVET EUROPEEN

(11) **EP 3 052 575 B1**
(45) Date de publication et mention de la délivrance du brevet: **08.01.2020**
(21) Numéro de dépôt: 14790519.4
(22) Date de dépôt: 24.09.2014
(51) Int. Cl.: C09D 183/06, C08L 83/06

(54) **SUBSTRAT AVEC DES PROPRIÉTÉS ANTICALCAIRES ET PROCÉDÉ POUR OBTENIR UN TEL SUBSTRAT**
SUBSTRAT MIT ENTZUNDERUNGSEIGENSCHAFTEN UND VERFAHREN ZUR HERSTELLUNG SOLCH EINES SUBSTRATS
SUBSTRATE WITH DESCALING PROPERTIES AND PROCESS FOR OBTAINING SUCH A SUBSTRATE

(30) Priorité: 01.10.2013 BE 201300655
(43) Date de publication de la demande: 10.08.2016
(73) Titulaire: AGC Glass Europe, 1348 Louvain-la-Neuve (BE)
(72) Inventeur: DELESTREE, Mathilde, B-1050 Bruxelles (BE); FOURNIER, Cyriane, F-59000 Lille (FR); PEYROUX, Eugnéie, B-1652 Alsemberg (BE)
(74) Mandataire: Chabou, Samia
(86) Numéro de dépôt international: PCT/EP2014/070327
(87) Numéro de publication internationale: WO 2015/049135

(56) Documents cités:
- FR-A1- 2 954 832
- JP-A- 2004 027 033
- KONSTANTIN SIEGMANN ET AL: "Sol-gel coatings with lime repellent properties", JOURNAL OF SOL-GEL SCIENCE AND TECHNOLOGY, vol. 59, no. 3, 30 juin 2011 (2011-06-30), pages 574-579, XP55153063, ISSN: 0928-0707, DOI: 10.1007/s10971-011-2530-8

## Description

### 1. Domaine de l'invention

L'invention concerne une composition, plus précisément l'invention concerne une composition anticalcaire. L'invention concerne également un procédé de formation d'une couche anticalcaire sur au moins une partie d'au moins une des faces d'un substrat. Plus particulièrement, l'invention concerne un substrat revêtu sur au moins une partie d'au moins une de ses faces d'une couche anticalcaire.

L'invention peut être utilisée notamment dans le domaine des sanitaires, des portes de douches, des miroirs, et de manière générale toute surface pouvant être en contact avec une eau dure.

### 2. Solutions de l'art antérieur

Depuis toujours, la calcification des surfaces en contact avec des eaux dures représente un problème majeur notamment pour les installations sanitaires, les portes de douche, les miroirs de salle de bain, ou de manière générale toute surface pouvant être en contact avec une eau dure. Ce phénomène est principalement constaté dans les régions riches en calcaire. De manière générale, l'eau dissout le carbonate de calcium (CaCO₃), encore appelé calcaire ou CaMg(CO₃)₂ en présence de dioxyde de carbone selon la réaction suivante:

CaCO₃ + CO₂ + H2O → Ca²⁺ + 2HCO₃⁻

Cependant, l'hydrogénocarbonate de calcium (HCO₃) n'est stable qu'en solution. Ainsi, au contact d'une surface, la réaction inverse se produit, le carbonate de calcium précipite faisant apparaître une couche de calcaire (CaCO₃) difficile à éliminer.

Classiquement, des produits à base d'acides sont utilisés pour dissoudre les dépôts de calcaire. Cependant, ces produits sont peu écologiques et sont souvent irritants.

Sont également connus des revêtements de substrat à base de produits sol-gel qui permettent de fonctionnaliser la surface de différentes manières en la rendant, notamment, anticalcaire. De tels revêtements peuvent être appliqués sur divers substrats comme le verre, le plastique, les métaux et le bois.

Par exemple, Siegmann et al. ont décrit que le Polyéthylène glycol (PEG) lié à un silane pouvait être utilisé pour limiter le dépôt de calcaire sur des surfaces en verre ou en plastique (J Sol-Gel Sci Technol (2011) 59:574-579). Plus précisément, cet article décrit une couche anticalcaire de type sol-gel à base d'un PEG lié au triméthoxysilane (TMOS), soluble dans l'eau sur un substrat plastique ou verrier. Cependant, la couche anticalcaire proposée par Sigmann et al. ne présente pas une adhésion suffisante au substrat et ne présente pas de propriété anticalcaire durable.

Ainsi, il existe un besoin pour un substrat (verre, plastique, métal) avec une propriété anticalcaire durable et efficace qui soit facile et peu coûteux à produire.

### 3. Objectifs de l'invention

L'invention a notamment pour objectif, dans au moins un de ses modes de réalisation, de fournir une composition qui permette d'obtenir un substrat, une fois revêtu d'une telle composition, qui présente une propriété anticalcaire.

Un autre objectif de l'invention, dans au moins un de ses modes de réalisation, est de fournir un substrat qui présente une propriété anticalcaire durable, c'est-à-dire résistante aux conditions classiques d'utilisation et de nettoyage (résistance chimique, mécanique, vieillissement, ...).

Un autre objectif de l'invention, dans au moins un de ses modes de réalisation, est de fournir une couche qui empêche l'adhésion de cristaux de carbonate de calcium sur un substrat revêtu sur au moins une partie d'au moins une de ses faces d'une telle couche.

Un objectif de l'invention est de fournir une composition liquide qui permet d'obtenir une couche qui empêche l'adhésion de cristaux de carbonate de calcium et qui est peu coûteuse à produire.

L'invention, dans au moins un de ses modes de réalisation, a encore pour objectif de fournir une couche avec une propriété anticalcaire durable, en particulier résistante à l'eau, et qui est facile à mettre en œuvre.

Un autre objectif de l'invention, dans au moins un de ses modes de réalisation, est de fournir une couche qui améliore l'esthétique du substrat trempé recouvert partiellement ou totalement de calcaire et/ou de résidus de graisse provenant notamment des savons.

### 4. Exposé de l'invention

Conformément à un mode de réalisation particulier, l'invention concerne une composition permettant d'obtenir un substrat, une fois revêtu sur au moins une partie d'au moins une de ses faces, d'une telle composition, qui présente une propriété anticalcaire. L'invention concerne également un procédé de fabrication d'un substrat revêtu sur au moins une partie d'au moins une des faces du substrat d'une couche anticalcaire.

Selon l'invention, comme défini dans la revendication 1, une telle composition comprend :
a. au moins un premier précurseur à base de silicium de formule (X)(Z)ₙSi(OR)₃₋ₙ et,
b. au moins un second précurseur à base de silicium de formule Y_{n'}-Si(OR')_{4-n'}
où X est un groupement organique non hydrolysable comprenant un groupement de polyéthylène glycol;
Y est un groupement organique non-hydrolysable ne comprenant pas de groupement de polyéthylène glycol;
Z, R et R' sont des alkyles de formule C_{n"}H_{2n"+1}, Z, R et R' étant identiques ou différents ;
n est égal à 0 ou 1 et n' est compris entre 0 et 3.

Selon l'invention, on entend par « au moins un premier précurseur à base de silicium de formule (X)(Z)ₙSi(OR)₃₋ₙ, où X est un groupement organique non hydrolysable comprenant un groupement de polyéthylène glycol, Z et R sont des alkyles de formule C_{n"}H_{2n"+1}, Z et R étant identiques ou différents et n est égal à 0 ou 1, un silicate organiquement modifié encore appelé ORMOSIL. Les ORMOSILS sont de manière générale bien connus de l'homme du métier.

Au sens de la présente invention, on utilise indifféremment les termes, « au moins un premier précurseur à base de silicium » ou « ORMOSIL » pour désigner un premier précurseur à base de silicium de formule (X)(Z)ₙSi(OR)₃₋ₙ, où X est un groupement organique non hydrolysable comprenant un groupement de polyéthylène glycol, Z et R sont des alkyles de formule C_{n"}H_{2n"+1}, Z et R étant identiques ou différents et n est égal à 0 ou 1.

Au sens de la présente invention, on appelle « polyéthylène glycol » ou PEG, des polymères polyéthers linéaires de faible masse molaire (inférieur à 20000g/mol) fabriqués à partir d'un nombre n de monomères d'éthylène glycol de formule suivante : 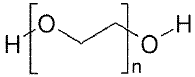 avec n supérieur ou égal à 4.

Selon l'invention, le PEG présente un nombre n de monomères d'éthylène glycol compris entre 6 et 9.

Selon l'invention, X est un groupement organique non hydrolysable de formule :

(CH2)ₓ-PEG-(CH2)ₓ

où x est compris entre 1 et 5 et le PEG est un polyéthylène glycol composé de 6 à 9 monomères d'éthylène glycol.

Selon un mode de réalisation particulier de l'invention, le au moins un premier précurseur à base de silicium de formule (X)(Z)ₙSi(OR)₃₋ₙ, où X est un groupement organique non hydrolysable comprenant un groupement de polyéthylène glycol, Z et R sont des alkyles de formule C_{n"}H_{2n"+1}, Z et R étant identiques ou différents et n est égal à 0 ou 1 est choisi parmi le parmi le groupe comprenant le 2-[Methoxy(polyéthyleneoxy)propyl]triméthoxysilane, 2-[methoxy(polyethyleneoxy)propyl]trichlorosilane, (dimethylsiloxane)-(ethylene oxide).

Selon l'invention, on entend par « au moins un second précurseur à base de silicium de formule Y_{n'}-Si(OR')_{4-n'} où Y est un groupement organique non-hydrolysable ne comprenant pas de groupement de polyéthylène glycol; R' est un alkyle de formule C_{n"}H_{2n"+1}, et n' est compris entre 0 et 3, un composé hydrolysable tel qu'un alcoxyde de silice. Il est entendu que l'homme du métier pourrait également utiliser en tant que au moins un second précurseur de silicium, des chlorosilanes.

Selon l'invention, Z et R sont de manière préférée des alkyles de formule C_{n"}H_{2n"+1} avec n" compris entre 1 et 4 ; Z, R et R' étant différents.

Selon une mise en œuvre particulière de l'invention, Z et R sont choisis parmi le groupe comprenant un méthyl (n"=1), un éthyl (n"=2), un isopropyl (n"=3) et un butyl (n"=4). R' est toujours choisi parmi le groupe comprenant méthyl, éthyl, isopropyl et butyl.

De manière préférée, le au moins un second précurseur à base de silicium est choisi parmi le groupe comprenant le tétraéthoxysilane, le triméthoxysilane, le méthyltriméthoxysilane, le méthyltriéthoxysilane, l'éthyltriméthoxilane, le propyltriméthoxysilane, l'isobutyltriméthoxysilane, l'octatryéthoxysilane, le phenyltriéthoxysilane, le tétraméthoxysilane, l'acétoxyproplytriméthoxysilane, l'aminopropyltriméthoxysilane, l'aminopropyltriéthoxysilane, le 3 cyanopropyltriéthoxysilane, le (3 glycidoxypropyl)triméthoxysilane. le vinyltriethoxysilane, vinyltrimethoxysilane, le N-2-(Aminoethyl)-3-aminopropylmethyldimethoxysilane, le N-2-(Aminoethyl)-3-aminopropyltrimethoxysilane.

De manière préférée, le au moins un premier précurseur à base de silicium est le 2-[Methoxy(polyethyleneoxy)propyl]trimethoxysilane et le au moins second précurseur de silicium est le triéthoxysilane (TEOS).

Selon un mode de réalisation préféré de l'invention, le au moins un second précurseur à base de silicium est choisi parmi le tétraéthoxysilane, méthyltriméthoxysilane, méthyltriethoxysilane, éthyltriméthoxysilane. De manière plus préférée, le au moins un second précurseur à base de silicium est le tétraéthoxysilane encore appelé tétraéthylorthosilicate ou TEOS, pour son adhésion et sa compatibilité avec un substrat tel que le verre, la céramique, le plastique, ou le métal.

Le principe général de l'invention repose sur une approche tout à fait nouvelle et inventive car elle permet de solutionner les inconvénients de l'art antérieur et de résoudre le problème technique posé. Les inventeurs ont en effet mis en évidence qu'il était possible, en combinant :
a. au moins un premier précurseur à base de silicium de formule (X)(Z)ₙSi(OR)₃₋ₙ où X est un groupement organique non hydrolysable comprenant un groupement de polyéthylène glycol et n est égal à 0 ou 1 et,
b. au moins un second précurseur à base de silicium de formule Y_{n'}-Si(OR')_{4-n'}, où Y est un groupement organique non-hydrolysable ne comprenant pas de groupement de polyéthylène glycol; et n' est compris entre 0 et 3 ;
et où Z, R et R' sont des alkyles de formule C_{n"}H_{2n"+1}, Z, R et R' étant identiques ou différents, les deux précurseurs étant comme définis à la revendication 1 ; d'obtenir une couche anticalcaire possédant une bonne résistance mécanique, chimique et résistance au vieillissement. En outre, la couche anticalcaire selon l'invention présente une très bonne adhésion au substrat et une propriété anticalcaire améliorée.

De plus, la couche selon l'invention permet d'améliorer l'esthétique du substrat trempé et plus particulièrement du verre trempé lorsque celui est recouvert partiellement ou totalement de calcaire et/ou de résidus de graisse provenant notamment des savons et qui est peu coûteuse à produire. La couche selon l'invention a donc également des propriétés d'antisalissures.

Ce résultat est très surprenant dans la mesure où, comme mentionné précédemment, un précurseur de silice de formule (X)(Z)ₙSi(OR)₃₋ₙ où X est un groupement organique non hydrolysable comprenant un groupement de polyéthylène glycol et n est égal à 0 ou 1 utilisé seul ne permet pas après son application sur au moins une partie d'au moins une de faces d'un substrat de conférer de telles propriétés durables au substrat.

On entend par « couche anticalcaire », une couche qui empêche totalement ou partiellement l'adhésion ou le dépôt de cristaux de carbonate de calcium (CaCO₃) encore appelé calcaire sur au moins une des faces d'un substrat. Le dépôt de calcaire se manifeste notamment par l'apparition de taches blanches de tailles plus ou moins importantes sur la surface du substrat.

On entend par « une couche anticalcaire durable », une couche qui empêche totalement ou partiellement l'adhésion ou le dépôt de cristaux de carbonate de calcium (CaCO₃) encore appelé calcaire sur un substrat et qui résiste aux conditions usuelles d'utilisation et de nettoyage du substrat présentant sur au moins une partie d'au moins une de ses faces, une couche anticalcaire selon l'invention. Pour être qualifiée de « durable », la couche doit être résistante mécaniquement, chimiquement, et résister au vieillissement (notamment ne pas être dégradée par les UV, par l'humidité ou la température).

On entend par salissure, la saleté et les résidus de graisse, de savon, de shampoing qui détériorent progressivement la surface du verre par exemple. Par exemple, le verre ordinaire perd son aspect brillant dès les premiers contacts avec l'eau et cela malgré un nettoyage régulier. Le verre et notamment le verre de douche perd alors de sa brillance au fil du temps.

L'invention concerne donc également une couche obtenue à partir d'une composition selon l'invention.

Il est entendu que la composition peut être également utilisée pour former des couches ayant des propriétés anti-salissures, des propriétés anti-réfléchissantes et bien entendu des propriétés anticalcaires, ou hydrophiles. Les propriétés anticalcaires et/ou antisalissures sont celles préférentiellement recherchées.

En outre, les inventeurs ont montré que de manière surprenante une couche anticalcaire comprenant une quantité supérieure à 75% en moles du au moins un second précurseur à base de silicium de formule Y_{n'}-Si(OR')_{4-n'}, où Y est un groupement organique non-hydrolysable ne comprenant pas de groupement de polyéthylène glycol; et n' est compris entre 0 et 3 et où R' est un alkyle de formule C_{n"}H_{2n"+1}, par rapport à la quantité totale de précurseurs à base de silicium et préférentiellement présent à une quantité supérieure ou égale à 80% en moles du au moins un second précurseur à base de silicium de formule Y_{n'}-Si(OR')_{4-n'}, où Y est un groupement organique non-hydrolysable ne comprenant pas de groupement de polyéthylène glycol; et n' est compris entre 0 et 3 et où R' est un alkyle de formule C_{n"}H_{2n"+1}, par rapport à la quantité totale de précurseurs à base de silicium et plus préférentiellement au plus 90% en moles du au moins un second précurseur à base de silicium de formule Y_{n'}-Si(OR')_{4-n'}, où Y est un groupement organique non-hydrolysable ne comprenant pas de groupement de polyéthylène glycol; et n' est compris entre 0 et 3 et où R' est un alkyle de formule C_{n"}H_{2n"+1}, par rapport à la quantité totale de précurseurs à base de silicium, permet d'obtenir un bon compromis entre d'une part, l'amélioration de la propriété anticalcaire de la couche et d'autre part, la durabilité de la couche et le haze. De telles quantités de précurseurs permettent en outre une très bonne adhésion de la couche anticalcaire sur au moins une partie de la surface du substrat.

Un autre objet de l'invention concerne le procédé de fabrication de la composition telle que décrite précédemment. Ledit procédé est tel qu'il comprend les étapes suivantes :
a. La préparation d'un sol à partir du au moins un premier précurseur à base de silicium de formule (X)(Z)ₙSi(OR)₃₋ₙ tel que défini à la revendication 1, dans un solvant alcoolique et/ou hydro-alcoolique à pH acide ;
b. L'ajout d'au moins un second précurseur à base de silicium de formule Y_{n'}-Si(OR')_{4-n'}, tel que défini à la revendication 1 dans le sol préparé à l'étape (a);
c. Le mélange du sol obtenu à l'étape a) avec le au moins un second précurseur à base de silicium pour former un sol-gel comprenant lesdits premier et second précurseurs à base de silicium,
les deux premières étapes pouvant être réalisées simultanément ou bien successivement.

Selon l'invention, le terme « sol-gel » est une contraction bien connue des termes « solution-gélification ».

Selon l'invention, la composition comprend une quantité supérieure à 75% en moles du au moins un second précurseur à base de silicium par rapport à la quantité totale de précurseurs à base de silicium et préférentiellement présent à une quantité à une quantité supérieure ou égale à 80% en moles et plus préférentiellement au plus 90% en moles de ce précurseur par rapport à la quantité totale de précurseurs à base de silicium. En effet, cette teneur élevée du au moins un second précurseur permet d'obtenir un bon compromis entre d'une part, l'amélioration de la propriété anticalcaire de la couche et d'autre part, la durabilité de la couche et le haze. De telles quantités de précurseurs permettent en outre une très bonne adhésion de la couche anticalcaire sur le substrat.

De manière préférée, le au moins un premier précurseur à base de silicium selon l'invention est le 2-[Methoxy(polyethyleneoxy)propyl]trimethoxysilane et le au moins un second précurseur à base de silicium est le triéthoxysilane (TEOS).

Un autre objet de l'invention concerne le procédé de formation d'une couche anticalcaire sur au moins une partie d'au moins une des faces d'un substrat. Selon l'invention, un tel procédé comprend les étapes de formation de la couche anticalcaire et/ou antisalissures suivantes:
a. La préparation d'un sol à partir du au moins un premier précurseur à base de silicium de formule (X)(Z)ₙSi(OR)₃₋ₙ selon la revendication 1 dans un solvant alcoolique et/ou hydro-alcoolique à pH acide ;
b. L'ajout du au moins un second précurseur à base de silicium de formule Y_{n'}-Si(OR')_{4-n'} selon la revendication 1 dans le sol préparé à l'étape (a);
c. Le mélange du sol obtenu à l'étape a) avec le au moins un second précurseur à base de silicium pour former un sol-gel comprenant lesdits premier et second précurseurs à base de silicium.
d. Le dépôt sur au moins une partie d'au moins une des faces du substrat, du sol-gel obtenu à l'étape c) ; et
e. Le séchage du substrat revêtu dudit sol-gel,
les deux premières étapes pouvant être réalisées simultanément ou bien successivement.

Selon une mise en œuvre particulière de l'invention, le séchage du substrat de l'étape e) est réalisé par un traitement thermique de séchage ou d'élimination du ou des solvant du substrat revêtu d'une couche anticalcaire à une température inférieure ou égale à 200 °C, préférentiellement inférieure ou égale à 150 °C du substrat revêtu.

Le dépôt sur le substrat du mélange sol-gel du au moins un premier précurseur à base de silicium et au moins un second précurseur à base de silicium peut être réalisé par pulvérisation, par immersion et tirage à partir du sol de silice (dip coating), par centrifugation (spin coating), par coulée (flow-coating),par rouleau (roll coating) ou par impression (ink-jet).

Selon l'invention, le substrat peut être un substrat verrier, plastique, céramique ou métallique.

Selon une mise en œuvre avantageuse de l'invention, le substrat est un substrat verrier. Le procédé peut alors de préférence comprendre une étape de traitement de trempe, lorsqu'une trempe thermique du verre est nécessaire. On appelle « trempe thermique », le fait de porter le verre à haute température en le passant dans un four, jusqu'à atteindre une température proche de son point de ramollissement (de 570 C à 700 C, en fonction de sa composition). Il est ensuite refroidi rapidement en surface, au moyen de jets d'air ou en le plongeant dans un bain (de silicone par exemple) à basse température. Après trempe, on obtient ainsi une couche poreuse et hydrophile.

De manière surprenante, les inventeurs ont montré que le substrat verrier recouvert d'une couche selon l'invention et trempé permet d'améliorer l'esthétique dudit substrat verrier lorsque celui est souillé partiellement ou totalement avec du calcaire et/ou de résidus de graisses provenant notamment des savons. Le calcaire et/ou les résidus de graisse ne forment alors pas des tâches sous forme de spots mais le calcaire et/ou la salissure sont répartis de manière uniforme et en fine couche sur la surface du substrat.

Ainsi, le substrat verrier revêtu de la couche selon l'invention peut ultérieurement être traité thermiquement en vue de sa trempe ou en vue de son bombage. De manière avantageuse, la dernière étape du procédé de l'invention (condensation/formation de la couche) peut également correspondre à un traitement thermique en vue de la trempe ou du bombage du substrat, si elle est réalisée dans des conditions adaptées respectivement pour ces deux opérations (typiquement à des températures qui ne sont pas inférieures à 500°C et même de l'ordre de 600-700°C). La couche poreuse selon l'invention peut en effet supporter un tel traitement thermique.

Par la mise en œuvre du procédé, l'invention propose un substrat revêtu sur au moins une partie d'au moins une de ses faces d'au moins une couche poreuse et hydrophile essentiellement minérale de type sol-gel, la couche présentant des propriétés anticalcaires et/ou antisalissures durables (c'est-à-dire résistantes chimiquement, mécaniquement et résistantes au vieillissement). Ainsi, la demanderesse a découvert qu'une telle couche était moins sensible au calcaire et/ou salissure. En outre, une telle couche est résistante à l'eau, aux pollutions organiques susceptibles de dégrader sa propriété anticalcaire, résistante aux produits d'entretien, ainsi qu'aux frottements mécaniques exercé lors du nettoyage . Cela est d'autant plus important pour des façades de portes de douches, de miroirs exposés à des éclaboussures d'eau chargée en calcaire et/ou savons..., des sanitaires, des intérieurs de lave-linge et lave-vaisselle, de manière générale tout substrat pouvant être en contact avec une eau dure, savon et graisse et devant régulièrement subir des nettoyages avec des détergents agressifs.

Selon un mode de réalisation préféré de l'invention, le au moins un premier précurseur à base de silicium est le 2-[Methoxy(polyethyleneoxy)propyl]trimethoxysilane et le au moins second précurseur à base de silicium mis en œuvre dans le procédé de formation d'une couche anticalcaire est le TEOS.

En effet, les inventeurs ont montré que de manière surprenante une couche anticalcaire comprenant au moins 75% en moles de TEOS par rapport à la quantité totale de précurseurs à base de silicium (ORMOSIL + TEOS), préférentiellement au moins 75% en moles de TEOS par rapport à la quantité totale de précurseurs à base de silicium, encore plus préférentiellement au moins 80% en moles de TEOS par rapport à la quantité totale de précurseurs à base de silicium, et plus préférentiellement au plus 90% en moles de TEOS par rapport à la quantité totale de précurseurs à base de silice, permet d'obtenir un bon compromis entre d'une part, l'amélioration de la propriété anticalcaire de la couche et d'autre part, la durabilité de la couche et le haze et surtout permet une très bonne adhésion de la couche anticalcaire sur le substrat.

Ainsi, l'invention propose un substrat revêtu sur au moins une partie d'au moins une des faces du substrat d'une couche poreuse, essentiellement minérale de type sol-gel, la couche présentant des propriétés anticalcaires, et/ou anti-salissures durables et trempables.

Selon un mode de réalisation préférentiel ou conforme à l'invention, le substrat est un substrat verrier. En particulier, le substrat est un substrat verrier qui comprend au moins une feuille de verre munie sur au moins une partie d'au moins une de ses faces, d'une couche anticalcaire et/ou antisalissures poreuse, ladite couche comprenant majoritairement un réseau d'oxyde de silice.

Selon l'invention, le substrat verrier comprend une feuille de verre. Le verre selon l'invention peut appartenir à diverses catégories. Le verre peut ainsi être un verre de type sodo-calcique, un verre au bore, un verre comprenant un ou plusieurs additifs répartis de manière homogène dabs sa masse, tels que, par exemple, au moins un colorant organique, un composé oxydant, un agent régulateur de la viscosité et/ou un agent facilitant la fusion. De préférence, le verre de l'invention est de type sodo-calcique. Le verre de l'invention peut être un verre flotté, un verre étiré ou un verre imprimé ou texturé par exemple par un rouleau ou par attaque acide ou alcaline. Il peut être clair, extra-clair, sablé et/ou maté, de préférence le verre est un verre extra-clair. L'expression « verre sodo-calcique » est utilisée ici dans son sens large et concerne tout verre qui contient les composants de base suivants (exprimés en pourcentages en poids total de verre) :

| | |
|---|---|
| SiO2 | 60 à 75% |
| Na2O | 10 à 20% |
| CaO | 0 à 16% |
| K2O | 0 à 10% |
| MgO | 0 à 10% |
| Al2O3 | 0 à 5% |
| BaO | 0 à 2% |
| BaO + CaO+MgO | 10 à 20% |
| K2O+Na2O | 10 à 20% |

Elle désigne aussi tout verre comprenant les composants de base précédents qui peut comprendre en outre un ou plusieurs additifs.

La feuille de verre de l'invention peut avoir une épaisseur variant, par exemple, de 2 à 10 mm.

Le substrat peut être plan voire courbé, organique ou minéral, notamment en verre sous forme d'une feuille, dalle, tube.

A titre d'exemples de matériaux verriers, on peut citer le verre float (ou verre flotté) de composition sodo-calcique classique, éventuellement durci ou trempé par voie thermique ou chimique, un borosilicate d'aluminium ou de sodium ou toute autre composition.

Le verre peut être coloré, teinté dans la masse ou avec une couche décorative. Il peut comprendre une couche réfléchissante (réfléchie) (pour former un miroir) ou une couche d'émail ou peignant (pour la couverture de mur).

Des substrats verriers conformes à l'invention peuvent avoir des applications variées. Ces substrats peuvent être utilisés comme vitrage pour portes de douche, des aquariums, des vitrines (intérieures ou extérieures), des serres, des cadres ou tableaux, des miroirs, etc. Ils peuvent également être utilisés dans des domaines tels que le transport aéronautique, maritime, terrestre (par ex. des pare-brise), pour le bâtiment, ou pour l'électroménager.

Selon un autre mode particulier de l'invention, le substrat est un substrat « plastique ». A titre d'exemples de matières plastiques, on peut citer le polyéthylène, polypropylène ou encore l'acrylonitrile-butadiène-styrène, le poly(méthacrylate de méthyle (PMMA), polyvinylbutyral (PVB), polycarbonate (PC) ou polyuréthane (PU), copolymère éthylène/acétate de vinyle (EVA) thermoplastique, poly(téréphtalate d'éthylène) (PET), poly(téréphtalate de butylène) (PBT), copolymères polycarbonates/polyester, copolymère cyclooléfinique du type éthylène/norbornène ou éthylène/cyclopentadiène, les résines ionomères, par exemple un copolymère éthylène/acide (méth)acrylique neutralisé par une polyamine, les thermodurcissables ou thermoréticulables tels que polyuréthane, polyester insaturé (UPE), copolymère éthylène/acétate de vinyle ...) ou d'une combinaison de plusieurs de ces matériaux. Lorsque le substrat est en plastique, il est de préférence prétraité avant l'application de la couche anticalcaire. Le prétraitement peut par exemple être l'application d'une sous-couche qui s'avère utile quand la surface sous-jacente est en plastique car elle permet de renforcer l'adhésion de la couche poreuse. Le prétraitement peut également prendre la forme d'un préchauffage du substrat, d'un traitement à un plasma à oxygène, ou encore l'application préalablement à l'application de la couche anticalcaire d'un agent favorisant l'adhésion de la couche anticalcaire au substrat tel que le (3-Glycidyloxypropyl)triméthoxysilane (GPTMS) ou encore la combinaison du traitement à un plasma à oxygène et le dépôt du GPTMS sur au moins une partie d'au moins de ses faces du substrat plastique. Le but de ces traitement est de rendre hydrophile la surface du substrat plastique et d'augmenter l'énergie de surface.

Des substrats plastiques conformes à l'invention peuvent avoir des applications variées. Ces substrats peuvent être utilisés comme vitrage pour portes de douche, des aquariums, etc. Ils peuvent également être utilisés dans des domaines tels que les sanitaires par exemple pour les lavabos, les baignoires, les socles de douche...

Selon un autre mode particulier de l'invention, le substrat est un substrat métallique par exemple fait d'acier ou d'acier inoxydable. Lorsque le substrat est en métal, il est de préférence prétraité avec l'application de la couche anticalcaire. Par exemple, le substrat métallique peut être revêtu par une première couche pour favoriser l'adhésion de la couche anticalcaire.

Des substrats métalliques conformes à l'invention peuvent avoir des applications variées. Ces substrats peuvent être utilisés comme intérieur de lave-vaisselle, lave-linge, lavabos, tables en inox...

Selon l'invention, et en l'absence de précision, on comprend par « couche », soit une couche unique (monocouche) soit une superposition de strates (multicouche). Selon un mode de réalisation avantageux, la couche peut être sous forme d'une superposition de strate. On peut préférer notamment fabriquer des strates de plus en plus poreuses en s'éloignant du substrat porteur, et/ou des strates d'épaisseurs différentes, ceci afin d'améliorer davantage l'effet anticalcaire.

Selon l'invention, le substrat est revêtu totalement ou partiellement par la couche anticalcaire sur au moins une partie d'au moins une de ses faces. La couche peut s'étendre de façon continue sur substantiellement toute la surface du substrat, par exemple sur plus de 90% de sa surface, préférentiellement sur plus de 95% de sa surface. Alternativement, la couche peut recouvrir partiellement la surface du substrat. Le substrat peut également être revêtu sur chacune de ses faces, partiellement ou totalement de ladite couche.

Selon un mode de réalisation préféré de l'invention, la couche anticalcaire a une épaisseur qui est comprise entre 100 nm et 1000 nm, préférentiellement comprise entre 150 nm et 800 nm, plus préférentiellement comprise entre 200 nm et 800 nm, le plus préférentiellement comprise entre 200 nm et 600 nm. Les inventeurs ont déterminé que de manière surprenante de telles épaisseurs de couche anticalcaire permettent d'obtenir une propriété anticalcaire améliorée.

Selon un autre mode de réalisation préféré, une sous-couche peut être interposée entre la feuille de verre et la couche anticalcaire et/ou antisalissures. La sous-couche de l'invention peut par exemple jouer le rôle de promoteur de l'adhésion de la couche anticalcaire au substrat. La sous-couche de l'invention peut aussi par exemple jouer le rôle de barrière aux alcalins.

Selon ce mode de réalisation, la sous-couche comprend de préférence au moins un composé choisi parmi l'oxyde de zirconium, l'oxyde de titane, l'oxyde d'aluminium, l'oxyde de silicium et l'oxynitrure de silicium. De manière préférée, la sous-couche comprend majoritairement un composé choisi parmi l'oxyde de zirconium, l'oxyde de titane, l'oxyde d'aluminium, l'oxyde de silicium et l'oxynitrure de silicium. De manière plus préférée, la sous-couche comprend majoritairement de l'oxyde de silicium. Par une sous-couche comprenant majoritairement un des composés parmi la liste ci-dessus, on entend une sous-couche constituée dudit composé à raison d'au moins 80% en poids par rapport au poids total de la couche, et de préférence, d'au moins 90% en poids. De préférence, la sous-couche comprend un composé choisi parmi l'oxyde de zirconium, l'oxyde de titane, l'oxyde d'aluminium, l'oxyde de silicium et l'oxynitrure de silicium, ledit composé étant associé avec un composé additionnel sélectionné parmi l'oxyde de zirconium, l'oxyde de titane, l'oxyde d'aluminium, l'oxyde de silicium. Le ou les oxydes additionnels peuvent représenter au plus 10% en poids de l'ensemble et de préférence au plus 5%. Le plus préférentiellement, la sous-couche est à base d'oxyde de silicium, ledit oxyde de silicium étant associé à au moins un autre oxyde sélectionné parmi le groupe comprenant l'oxyde de zirconium, l'oxyde de titane, l'oxyde d'aluminium. De préférence, la sous-couche a une épaisseur qui est comprise entre 5 nm et 200 nm, préférentiellement comprise entre 50 nm et 150 nm.

La sous-couche selon l'invention peut également être déposée par la méthode sol-gel mais aussi par la méthode de dépôt en phase vapeur (CVD) ou par pulvérisation cathodique. Préférentiellement, la sous-couche est déposée par méthode sol-gel, les inventeurs ayant déterminé que de manière surprenante une sous-couche déposée par méthode sol-gel permet d'obtenir une meilleure adhésion de la couche anticalcaire poreuse, plus particulièrement lorsque ladite sous-couche est soumise, après application de la solution sol-gel à l'origine de ladite sous-couche sur la feuille de verre et de préférence avant application de la solution sol-gel à l'origine de la couche anticalcaire poreuse, à un traitement thermique inférieur ou égal à une température de 200°C.

Le substrat verrier selon une mise en œuvre particulière de l'invention peut également comprendre une surcouche, déposée sur la couche anticalcaire selon l'invention. Une telle surcouche peut par exemple renforcer davantage la durabilité chimique de la couche anticalcaire en cas d'application en extérieur ou en milieu humide, par exemple.

Enfin l'invention, la couche anticalcaire n'altère pas le haze. On entend par « haze », une brume qui engendre une visibilité basse causée par les particules de sable, la poussière ou la diffusion de fumée dans l'air. Ainsi, l'importance des phénomènes diffusionnels provoqués par une surface peut être mesurée par l'utilisation d'une sphère d'intégration montée dans un spectrophotomètre.

Enfin, l'invention a aussi pour objet des portes de douche, des sanitaires, des miroirs, des revêtements intérieurs des lave-linge, lave-vaisselle, des lavabos ...comprenant le substrat revêtu d'une couche anticalcaire, antisalissures selon l'invention.

D'autres caractéristiques et avantages de l'invention apparaîtront plus clairement à la lecture de la description suivante d'un mode de réalisation préférentiel, donné à titre de simple exemple illustratif et non limitatif, parmi lesquels :
Les exemples qui suivent illustrent l'invention, sans intention de limiter de quelque façon sa couverture.

### Exemples

Les exemples suivants sont destinés à comparer l'efficacité et la durabilité de la couche anticalcaire et/ou antisalissures.
Exemple *1 (comparatif PEG+TEOS)* : Une formulation est préparée en mélangeant du tétraéthoxysilane (TEOS), de l'éthanol, de l'eau et de l'acide chlorhydrique (HCl) respectivement dans les ratios molaires suivants : 1 :4 :4 :0.068. A ce mélange, on ajoute du PEG (1500, 30%) comportant entre 6 et 9 monomères d'éthylène glycol à un pourcentage molaire compris entre 0.1 à 0.75% par rapport à la quantité totale de solvant. Ensuite, la solution est mise à réagir sous agitation pendant environ deux heures à température ambiante afin de permettre l'hydrolyse du précurseur à base de silicium et d'obtenir un « sol ». Le mélange est alors séché à température ambiante durant environ 24 heures pour former un sol-gel. Enfin , environ 2 ml du mélange sont déposés sur un substrat en verre « clair » de 10x10 cm² (dimensions) par un procédé de « spin coating ». Le verre revêtu du mélange est alors séché durant 30 minutes à l'air libre pour former une couche. Ensuite, un traitement thermique de l'assemblage final du verre/ couche est réalisé au cours d'un processus de cuisson du verre, réalisé à 80°C pendant une heure.
Exemple *2* (comparatif ORMOSIL): Une formulation est préparée à partir d'un ORMOSIL commercial comprenant le 2-[Methoxy(polyéthyleneoxy)propyl]triméthoxysilane (PEG avec n= 6 à 9 éthylène glycol) en faisant varier le pourcentage molaire en ORMOSIL par rapport à la quantité totale de sol de 0.3 à 1%. Pour un volume final de 25ml de solution, de 0.4 à 1.5ml d'ORMOSIL sont dissouts dans 6 ml d'isopropanol. Ensuite, 0.26*µ*l d'acide chlorhydrique à 0.01M sont ajoutés au mélange ORMOSIL /isopropanol. Ensuite, la solution est mise à réagir sous agitation pendant environ vingt heures à température ambiante afin de permettre l'hydrolyse du précurseur à base de silicium et d'obtenir un « sol » comprenant le ORMOSIL Le mélange réactionnel est ensuite dilué dans 18 ml d'isopropanol.
Exemple *3 (comparatif* ORMOSIL *+H2O)* : A partir du mélange sol-gel 2, un à deux équivalents d'eau par groupement hydrolysable sont ajoutés afin de rendre le mélange plus hydrophile et augmenter la mouillabilité du mélange.
Exemple *4*- *(**selon l'invention**)* : Une formulation est préparée à partir de 0.67 % de 2-[Methoxy(polyéthyleneoxy)propyl]triméthoxysilane par rapport à la quantité totale de silane et un pourcentage variable allant de 0 à 100% molaire de TEOS par rapport à la quantité totale de silane. Pour un formulation finale de 25ml de solution, 1 ml de PEG-silane comprenant un mélange de 6 à 9 monomères d'éthylène glycol, est ajouté à de 0 à 5 ml de TEOS. Le mélange ORMOSIL /TEOS est alors dissout dans 6 ml d'isopropanol. Ensuite, environ 2 ml d'eau et 0.26*µ*l d'acide chlorhydrique à 0.01M sont ajoutés au mélange. La solution a été laissée réagir sous agitation pendant environ vingt heures à température ambiante afin de permettre l'hydrolyse du précurseur à base de silicium et d'obtenir un « sol » comprenant le ORMOSIL et le TEOS. Le mélange réactionnel est ensuite dilué dans 18 ml d'isopropanol.
   - *Dépôt sur le verre :* Environ 2 ml de chacun des mélanges 1 2,3 et 4 sont déposés respectivement sur une des faces, et cela toute sa surface, d'un substrat en verre « clair » de 10x10 cm² (un mélange par substrat) par un procédé de « spin coating » dans des conditions expérimentales identiques pour chacun. Les verres revêtus respectivement des mélanges 1 à 4 sont séchés durant 30 minutes à l'air libre pour former une couche. Ensuite, un traitement thermique de l'assemblage final d verre/ couche est réalisé au cours d'un processus de cuisson du verre, réalisé à 120°C pendant une heure.
   - *Propriété anticalcaire :* La propriété anticalcaire des substrats verriers revêtus au départ des mélanges 1 à 4 (respectivement, substrat 1 à 4) est testée après immersion des substrats 1 à 4 dans un bain de calcaire durant 20 heures et mesure du haze. Le Haze est ainsi mesuré avant et après l'immersion dans le bain de calcaire. Le bain de calcaire est préparé à partir d'une solution contenant 10mM de NaHCO₃ et 5mM de CaCl₂. Ainsi après avoir mesuré le haze de référence, c'est-à-dire celui mesuré avant l'immersion dans le bain de calcaire, les échantillons sont plongés dans le bain de calcaire pendant 20h. Après l'immersion dans le bain de calcaire, la face du substrat opposée à celle revêtue par la couche 1 à 4 obtenue à partir respectivement des mélanges 1 à 4 est nettoyée avec de l'acide acétique 2% et le haze est alors de nouveau mesuré.

Le Haze mesuré avant et après immersion dans un bain de calcaire des échantillons est alors comparé à un haze mesuré à partir d'un verre clair de référence non revêtu d'une couche.

Selon l'invention, une couche sera définie comme ayant une propriété anticalcaire si après le test en immersion dans un bain de calcaire, son haze demeure au moins 50% inférieur à celui mesuré à partir de l'échantillon de control c'est-à-dire un verre clair non revêtu d'une couche anticalcaire.

La propriété anticalcaire des substrats verriers revêtus au départ des mélanges 1 à 4 (respectivement, substrat 1 à 4) est mesurée à l'aide d'un hazemètre qui projette un faisceau lumineux sur l'échantillon et mesure la déviation de celui-ci. Plus le nombre de particules qui encombre la surface du verre est important plus la déviation du faisceau sera importante également et par voie de conséquence plus le haze est élevé.

On remarque que pour les substrats revêtu d'une couche obtenue à partir du mélange 1 comprenant des quantités variables de PEG, le gain en haze est identique à celui du verre control. La propriété anticalcaire du PEG n'est pas significative. Les inventeurs ont montré que quelle que soit la teneur en PEG dans le mélange, le PEG se dissolvait dans le bain de calcaire et n'adhérait pas à la surface du substrat en verre.

Afin d'améliorer la stabilité du PEG et surtout son adhésion à la surface du substrat, le PEG a été lié à un silane formant ainsi un ORMOSIL conformément au mélange 2. Les inventeurs ont noté que le substrat revêtu d'une couche obtenue à partir du mélange 2, présentait un étalement du sol-gel qui n'était pas homogène. En effet, les longues chaînes du PEG peuvent entraîner un défaut de mouillage à la surface du substrat en verre. Le sol-gel se rétracte alors sur lui-même formant ainsi des gouttes .

Afin de remédier à ce défaut de démouillage (formation de gouttes), de l'eau a été ajoutée au mélange 2 afin d'obtenir le mélange 3. L'eau ajoutée permet de rendre le mélange plus hydrophile et augmenter sa mouillabilité. Les inventeurs ont constaté que malgré la présence du réseau formé grâce au silane, la couche obtenue à partir du mélange 3 n'était pas stable. En effet, même si une propriété anticalcaire a été mesurée, la couche n'adhérait pas de manière efficace et durable à la surface du substrat sur sa partie revêtue du sol-gel. Après visualisation du substrat au microscope, il apparait qu'une grande partie de la couche ayant immergée dans le bain de calcaire s'était détachée.

De manière surprenante, les inventeurs ont montré qu'en ajoutant au mélange 3, du TEOS à une quantité précise, la propriété anticalcaire ainsi que la durabilité de la couche qui revêt au moins une partie d'au moins une surface du substrat étaient fortement améliorées. Les inventeurs ont montré qu'à une quantité de TEOS comprise entre 20 et 90% en moles par rapport à la quantité totale de précurseurs à base de silice, des couches anticalcaires étaient obtenues puisque le gain en haze mesuré à partir des substrats revêtus d'une couche obtenue à partir du mélange 4 était inférieur à la moitié du haze obtenu à partir du substrat control, c'est-à-dire une verre clair non revêtu d'une couche anticalcaire.

En outre, les inventeurs ont montré que la couche obtenue à partir du mélange 4, présente une bonne adhérence au substrat revêtu sur au moins une partie de sa surface d'une telle couche que lorsque la quantité en du moins un second précurseur à base de silicium, à l'occurrence pour le mélange 4, le TEOS, par rapport à la quantité totale de précurseurs à base de silice est supérieure à 75%. La couche obtenue selon le mélange présente encore une meilleure adhérence au substrat lorsque celle-ci est obtenue à partir du mélange 4 comprenant une quantité du au moins second précurseur à base de silice supérieure à 80%. Cette adhérence est notamment visualisable au microscope après immersion des échantillons 67h dans un bain de calcaire.

Enfin, les inventeurs ont vérifié la durabilité de la propriété anticalcaire de la couche obtenue à partir du mélange 4 selon l'invention. Ainsi, les substrats verriers revêtus sur au moins une partie d'au moins une des surface du substrat d'une couche obtenue à partir d'un mélange comprenant une quantité de TEOS supérieure ou égale à 80% ont été immergés 3 fois dans un bain de calcaire durant 26 heures. Entre chaque immersion, les échantillons ont été lavés avec de l'eau déminéralisée. Après les 3 bains de calcaire, le haze a été comparé à celui mesuré avant la première immersion. Le haze obtenu à partir des échantillons testés était inférieur à la moitié du haze control mesuré à partir d'un verre clair non revêtu d'une couche anticalcaire. La couche ainsi obtenue présentait de manière répétée une bonne propriété anticalcaire. De plus, et de manière surprenante, les inventeurs ont montré qu'une couche anticalcaire obtenue à partir d'un mélange comprenant une quantité de TEOS comprise entre 81% et 85% en moles par rapport à la quantité totale de précurseurs à base de silice, la durabilité de la couche était accrue.

Dès lors, une augmentation de la performance anticalcaire et de la durabilité de la couche selon l'invention est obtenue en combinant au moins un premier précurseur à base de silicium de formule (X)(Z)ₙSi(OR)₃₋ₙ où X est un groupement organique non hydrolysable comprenant un groupement de polyéthylène glycol; Z et R sont des alkyles de formule C_{n"}H_{2n"+1}, Z, R étant identiques ou différents et n est égal à 0 ou 1, est le 2-[Methoxy(polyethyleneoxy)propyl]trimethoxysilane et le au moins second précurseur à base de silicium de formule Y_{n'}-Si(OR')_{4-n'}, où Y est un groupement organique non-hydrolysable ne comprenant pas de groupement de polyéthylène glycol; et n' est compris entre 0 et 3 et où R' est un alkyle de formule C_{n"}H_{2n"+1}; dans des quantités données. Un tel gain est vraiment significatif, en particulier dans le domaine des applications sanitaires, des portes des doches, miroirs, des lave-linges, lave-vaisselles... où le dépôt de calcaire en plus de détériorer l'esthétique, peut être la cause de pannes.

Bien entendu, l'invention n'est pas limitée aux exemples de réalisation mentionnés ci-dessus.

## Revendications

1. Composition comprenant :
a. au moins un premier précurseur à base de silicium de formule (X)(Z)ₙSi(OR)₃₋ₙ et,
b. au moins un second précurseur à base de silicium de formule Y_{n'}-Si(OR')_{4-n'}
où X est un groupement organique non hydrolysable comprenant un groupement de polyéthylène glycol;
où Y est un groupement organique non-hydrolysable ne comprenant pas de groupement de polyéthylène glycol;
où Z, R et R' sont des alkyles de formule C_{n"}H_{2n"+1}, Z, R et R' étant identiques ou différents et, n est égal à 0 ou 1 et n' est compris entre 0 et 3,
et en ce que X comprend de 6 à 9 monomères d'éthylène glycol et répond à la formule :
(CH₂)ₓ-PEG-(CH₂)ₓ
où x est compris entre 1 et 5 et PEG est un polyéthylène glycol composé de 6 à 9 monomères d'éthylène glycol,
et en ce que R' est choisi parmi le groupe comprenant un méthyl, un éthyl, un isopropyl, un butyl,
et en ce que la quantité du au moins un second précurseur à base de silicium est présent à une quantité supérieure à 75% en moles par rapport à la quantité totale de précurseurs à base de silicium et préférentiellement présent à une quantité à une quantité supérieure ou égale à 80% en moles par rapport à la quantité totale de précurseurs à base de silicium.

2. Composition selon l'une quelconques des revendications précédentes, **caractérisée en ce que** la quantité du au moins un second précurseur de silicium est présent à une quantité comprise entre 80% et 90% en moles par rapport à la quantité totale de précurseurs à base de silicium.

3. Composition selon l'une quelconques des revendications précédentes, **caractérisée en ce que** le au moins second précurseur à base de silicium est choisi parmi le groupe comprenant le tétraéthoxysilane, le triméthoxysilane, le méthyltriméthoxysilane, le méthyltriéthoxysilane, l'éthyltriméthoxilane, le propyltriméthoxysilane, l'isobutyltriméthoxysilane, l'octatryéthoxysilane, le phenyltriéthoxysilane, le tétraméthoxysilane, l'acétoxyproplytriméthoxysilane, l'aminopropyltriméthoxysilane, l'aminopropyltriéthoxysilane, le 3 cyanopropyltriéthoxysilane, le (3 glycidoxypropyl)triméthoxysilane. le vinyltriethoxysilane, vinyltrimethoxysilane, le N-2-(Aminoethyl)-3-aminopropylmethyldimethoxysilane, le N-2-(Aminoethyl)-3-aminopropyltrimethoxysilane.

4. Composition selon l'une quelconques des revendications précédentes, **caractérisée en ce que** le au moins second précurseur à base de silicium est choisi parmi le groupe comprenant un tétraéthoxysilane, un méthyltriméthoxysilane, un méthyltriethoxysilane, un éthyltriméthoxysilane.

5. Utilisation de la composition selon les revendications 1 à 4 pour former une couche anticalcaire sur au moins une partie d'au moins une de ses faces.

6. Couche anticalcaire obtenue à partir de la composition selon l'une quelconque des revendications 1 à 4.

7. Procédé de formation d'une couche anticalcaire sur au moins une partie d'au moins une des faces d'un substrat comprenant les étapes suivantes :
**a.** La préparation d'un sol à partir du au moins un premier précurseur à base de silicium de formule (X)(Z)ₙSi(OR)₃₋ₙ tel que défini à la revendication 1 dans un solvant alcoolique et/ou hydro-alcoolique à pH acide ;
**b.** L'ajout du au moins un second précurseur à base de silicium de formule Y_{n'}-Si(OR')_{4-n'} tel que défini à la revendication 1 dans le sol préparé à l'étape (a);
**c.** Le mélange du sol obtenu à l'étape a) avec le au moins second précurseur à base de silicium pour former un sol-gel comprenant lesdits premier et second précurseurs à base de silicium.
**d.** Le dépôt sur au moins une partie d'au moins une des faces du substrat, du sol-gel obtenu à l'étape c) ; et
**e.** Le séchage du substrat revêtu,
les deux premières étapes pouvant être réalisées simultanément ou bien successivement.

8. Procédé selon la revendication précédente **caractérisée en ce que** le séchage du substrat de l'étape e) est réalisé par un traitement thermique de séchage ou d'élimination du ou des solvant du substrat revêtu d'une couche anticalcaire à une température inférieure ou égale à 200 °C, préférentiellement inférieure ou égale à 150 °C du substrat revêtu.

9. Substrat revêtu d'une couche anticalcaire obtenue à selon l'une quelconque des revendications 7 à 8.

## Patentansprüche

1. Zusammensetzung, umfassend:
a. mindestens eine erste Vorstufe auf Basis von Silicium der Formel (X)(Z)ₙSi(OR)₃₋ₙ und
b. mindestens eine zweite Vorstufe auf Basis von Silicium der Formel Y_{n'}-Si(OR')_{4-n'},
wobei X für eine nicht hydrolysierbare organische Gruppe, die eine Polyethylenglykolgruppe umfasst, steht;
wobei Y für eine nicht hydrolysierbare organische Gruppe, die keine Polyethylenglykolgruppe umfasst, steht;
wobei Z, R und R' für Alkylgruppen der Formel C_{n"}H_{2n"+1} stehen, wobei Z, R und R' gleich oder verschieden sind; und n gleich 0 oder 1 ist und n' zwischen 0 und 3 liegt,
und dadurch, dass X 6 bis 9 Ethylenglykol-Monomere umfasst und der Formel:
(CH₂)ₓ-PEG-(CH₂)ₓ
entspricht, wobei x zwischen 1 und 5 liegt und PEG für ein Polyethylenglykol aus 6 bis 9 Ethylenglykol-Monomeren steht,
und dadurch, dass R' aus der Gruppe umfassend ein Methyl, ein Ethyl, ein Isopropyl und ein Butyl ausgewählt ist,
und dadurch, dass die Menge der mindestens einen zweiten Vorstufe auf Basis von Silicium in einer Menge von mehr als 75 Mol-%, bezogen auf die Gesamtmenge von Vorstufen auf Basis von Silicium, vorliegt und vorzugsweise in einer Menge in einer Menge größer oder gleich 80 Mol-%, bezogen auf die Gesamtmenge von Vorstufen auf Basis von Silicium, vorliegt.

2. Zusammensetzung nach einem der vorhergehenden Ansprüche, **dadurch gekennzeichnet, dass** die Menge der mindestens einen Silicium-Vorstufe in einer Menge zwischen 80 und 90 Mol-%, bezogen auf die Gesamtmenge von Vorstufen auf Basis von Silicium, vorliegt.

3. Zusammensetzung nach einem der vorhergehenden Ansprüche, **dadurch gekennzeichnet, dass** die mindestens zweite Vorstufe auf Basis von Silicium aus der Gruppe umfassend Tetraethoxysilan, Trimethoxysilan, Methyltrimethoxysilan, Methyltriethoxysilan, Ethyltrimethoxysilan, Propyltrimethoxysilan, Isobutyltrimethoxysilan, Octatriethoxysilan, Phenyltriethoxysilan, Tetramethoxysilan, Acetoxypropyltrimethoxysilan, Aminopropyltrimethoxysilan, Aminopropyltriethoxysilan, 3-Cyanopropyltriethoxysilan, (3-Glycidoxypropyl)-trimethoxysilan, Vinyltriethoxysilan, Vinyltrimethoxysilan, N-2-(Aminoethyl)-3-aminopropyl-methyldimethoxysilan und N-2-(Aminoethyl)-3-amino-propyltrimethoxysilan ausgewählt ist.

4. Zusammensetzung nach einem der vorhergehenden Ansprüche, **dadurch gekennzeichnet, dass** die mindestens zweite Vorstufe auf Basis von Silicium aus der Gruppe umfassend ein Tetraethoxysilan, ein Methyltrimethoxysilan, ein Methyltriethoxysilan und ein Ethyltrimethoxysilan ausgewählt ist.

5. Verwendung der Zusammensetzung nach den Ansprüchen 1 bis 4 zur Bildung einer Antikalksteinschicht auf mindestens einem Teil einer Seite davon.

6. Antikalksteinschicht, erhalten aus der Zusammensetzung nach einem der Ansprüche 1 bis 4.

7. Verfahren zur Bildung einer Antikalksteinschicht auf mindestens einem Teil mindestens einer der Seiten eines Substrats, das die folgenden Schritte umfasst:
a. Herstellen eines Sols aus der mindestens einen ersten Vorstufe auf Basis von Silicium der Formel (X)(Z)ₙSi(OR)₃₋ₙ gemäß Anspruch 1 in einem alkoholischen und/oder wässrig-alkoholischen Lösungsmittel bei saurem pH-Wert;
b. Zugeben der mindestens einen zweiten Vorstufe auf Basis von Silicium der Formel Y_{n'}-Si(OR')_{4-n'} gemäß Anspruch 1 zu dem in Schritt a) hergestellten Sol;
c. Mischen des in Schritt a) erhaltenen Sols mit der mindestens zweiten Vorstufe auf Basis von Silicium zur Bildung eines Sol-Gels, dass die erste und die zweite Vorstufe auf Basis von Silicium umfasst;
d. Aufbringen des in Schritt c) erhaltenen Sol-Gels auf mindestens einem Teil mindestens einer der Seiten des Substrats; und
e. Trocknen des beschichteten Substrats,
wobei die ersten beiden Schritte gleichzeitig oder auch nacheinander durchgeführt werden können.

8. Verfahren nach dem vorhergehenden Anspruch, **dadurch gekennzeichnet, dass** die Trocknung des Substrats in Schritt e) durch eine Wärmebehandlung zur Trocknung oder Entfernung des Lösungsmittels bzw. der Lösungsmittel des mit einer Antikalksteinschicht beschichteten Substrats bei einer Temperatur kleiner oder gleich 200 °C und vorzugsweise kleiner oder gleich 150 °C des beschichteten Substrats durchgeführt wird.

9. Substrat, das mit einer nach einem der Ansprüche 7 bis 8 erhaltenen Antikalksteinschicht beschichtet ist.

## Claims

1. Composition comprising:
a. at least one first silicon-based precursor of formula (X)(Z)ₙSi(OR)₃₋ₙ and
b. at least one second silicon-based precursor of formula Y_{n'}-Si(OR')_{4-n'}
where X is a non-hydrolysable organic group comprising a polyethylene glycol group;
where Y is a non-hydrolysable organic group that does not comprise a polyethylene glycol group;
where Z, R and R' are alkyls of formula C_{n"}H_{2n"+1}, Z, R and R' being identical or different; and n is equal to 0 or 1 and n' is between 0 and 3,
and in that X comprises
from 6 to 9 ethylene glycol monomers and corresponds to the formula:
(CH₂)ₓ-PEG-(CH₂)ₓ
where x is between 1 and 5 and PEG is a polyethylene glycol composed of 6 to 9 ethylene glycol monomers,
and in that R' is selected from the group comprising a methyl, an ethyl, an isopropyl and a butyl,
and in that the amount of the at least one second silicon-based precursor is present in an amount of greater than 75 mol% relative to the total amount of silicon-based precursors and preferably present in an amount in an amount of greater than or equal to 80 mol% relative to the total amount of silicon-based precursors.

2. Composition according to any one of the preceding claims, **characterized in that** the amount of the at least one second silicon precursor is present in an amount of between 80 mol% and 90 mol% relative to the total amount of silicon-based precursors.

3. Composition according to either one of the preceding claims, **characterized in that** the at least second silicon-based precursor is selected from the group comprising tetraethoxysilane, trimethoxysilane, methyltrimethoxysilane, methyltriethoxysilane, ethyltrimethoxysilane, propyltrimethoxysilane, isobutyltrimethoxysilane, octatriethoxysilane, phenyltriethoxysilane, tetramethoxysilane, acetoxypropyltrimethoxysilane, aminopropyltrimethoxysilane, aminopropyltriethoxysilane, 3-cyanopropyltriethoxysilane, (3-glycidoxypropyl)trimethoxysilane, vinyltriethoxysilane, vinyltrimethoxysilane, N-2-(aminoethyl)-3-aminopropylmethyldimethoxysilane and N-2-(aminoethyl)-3-aminopropyltrimethoxysilane.

4. Composition according to any one of the preceding claims, **characterized in that** the at least second silicon-based precursor is selected from the group comprising a tetraethoxysilane, a methyltrimethoxysilane, a methyltriethoxysilane and an ethyltrimethoxysilane.

5. Use of the composition according to Claims 1 to 4 for forming an anti-scaling layer on at least one portion of at least one of its faces.

6. Anti-scaling layer obtained from the composition according to any one of Claims 1 to 4.

7. Process for forming an anti-scaling layer on at least one portion of at least one of the faces of a substrate, comprising the following steps:
**a.** preparing a sol from the at least one first silicon-based precursor of formula (X)(Z)ₙSi(OR)₃₋ₙ as defined in Claim 1 in an alcoholic and/or aqueous-alcoholic solvent at acid pH;
**b.** adding the at least one second silicon-based precursor of formula Y_{n'}-Si(OR')_{4-n'} as defined in Claim 1 to the sol prepared in step a);
**c.** mixing the sol obtained in step a) with the at least second silicon-based precursor in order to form a sol-gel comprising said first and second silicon-based precursors;
**d.** depositing, on at least one portion of at least one of the faces of the substrate, the sol-gel obtained in step c); and
**e.** drying the coated substrate,
it being possible for the first two steps to be carried out simultaneously or else successively.

8. Process according to the preceding claim, **characterized in that** the substrate drying of step e) is carried out by a heat treatment for drying or eliminating the solvent (s) of the substrate coated with an anti-scaling layer at a temperature less than or equal to 200°C, preferably less than or equal to 150°C of the coated substrate.

9. Substrate coated with an anti-scaling layer obtained according to either one of Claims 7 and 8.
